# EUROPÄISCHE PATENTSCHRIFT

(11) **EP 2 632 292 B1**
(45) Veröffentlichungstag und Bekanntmachung des Hinweises auf die Patenterteilung: **31.12.2014**
(21) Anmeldenummer: 11773451.7
(22) Anmeldetag: 18.10.2011
(51) Int. Cl.: A46B 3/00, A46B 7/04, A46B 9/02, A46B 7/10, A45D 40/26

(54) **APPLIKATOREINRICHTUNG ZUM AUFTRAGEN EINES KOSMETIKUMS, APPLIKATORELEMENT HIERFÜR SOWIE KOSMETIKEINHEIT AUFWEISEND DIE APPLIKATOREINRICHTUNG**
APPLICATOR DEVICE FOR APPLYING A COSMETIC, APPLICATOR ELEMENT THEREFOR, AND COSMETIC UNIT COMPRISING THE APPLICATOR DEVICE
DISPOSITIF APPLICATEUR POUR APPLIQUER UN COSMÉTIQUE, ÉLÉMENT APPLICATEUR À CET EFFET AINSI QU'UNITÉ COSMÉTIQUE PRÉSENTANT LE DISPOSITIF APPLICATEUR

(30) Priorität: 27.10.2010 DE 202010014792 U
(43) Veröffentlichungstag der Anmeldung: 04.09.2013
(73) Patentinhaber: GEKA GmbH, 91572 Bechhofen (DE)
(72) Erfinder: KULIK, Daniela, 04277 Leipzig (DE); FISCHER, Werner, 91596 Burk (DE); THIERER, Gudrun, 91555 Feuchtwangen (DE)
(74) Vertreter: Misselhorn, Hein-Martin
(86) Internationale Anmeldenummer: PCT/EP2011/068170
(87) Internationale Veröffentlichungsnummer: WO 2012/055727

(56) Entgegenhaltungen:
- WO-A2-2010/007588
- FR-A1- 2 906 692

## Beschreibung

Die Erfindung betrifft einen Kosmetikapplikator nach dem Oberbegriff des Anspruchs 1.

Aus der DE 32 31 574 Al ist eine Kosmetikauftragbürste bekannt, bei der auf einem Bürstenkern mittels eines Beflockungsverfahrens Borsten aufgesetzt sind. Der Kern weist ringartige Vorsprünge auf, so dass die im Beflockungsverfahren aufgesetzten Borsten sich in Teilbereichen, insbesondere im Übergang von den Ringelvorsprüngen zum Kern des Trägerteils überlappen.

Bei einem derartigen Applikator ist von Nachteil, dass die Anordnung der Auftragsorgane/Borsten, welche im Beflockungsverfahren angebracht werden, nicht immer genau vorhersehbar ist und einem gewissen Zufall unterliegt. Insoweit ist auch die Bildung von sich überlappenden Borstenbereichen, insbesondere die Gestalt und die räumliche Ausdehnung der so gebildeten Überlappungsbereiche in einem gewissen Maß vom Zufall abhängig, da nicht immer sichergestellt werden kann, dass an jeder Stelle des Trägerteiles Borsten in gleicher Dichte angeordnet werden. Insoweit besteht der Bedarf, einen derartigen Mascaraapplikator zu verbessern und ein vorbestimmbareres Massenspeicherverhalten und eine vorbestimmbarere Charakteristik des Applikators hinsichtlich des Benetzungsverhaltens an Wimpern zu erreichen.

Aus der FR 2 906 692 ist eine Kosmetikauffragbürste bekannt, die zwar variabel ist, ober keine umfriedenstellende Manespeicherfähigkeit besitzt.

Aufgabe der Erfindung ist es daher, eine Applikatoreinrichtung für einen Kosmetikapplikator anzugeben, die die Nachteile des Standes der Technik vermeidet und insbesondere in großer Variabilität und einfacher Art und Weise kostengünstig herstellbar ist.

Des Weiteren soll ermöglicht werden, die Charakteristik der Applikatoreinrichtung insbesondere hinsichtlich der Massespeicherfähigkeit und die Charakteristik der Applikatoreinrichtung hinsichtlich der wimpernbenetzung in weiten Grenzen vorbestimmbar einstellbar zu gestalten.

Diese Aufgabe wird mit einer Applikatoreinrichtung mit den Merkmalen des Anspruchs 1 gelöst. Vorteilhafte Ausführungsformen sind in den abhängigen Ansprüchen angegeben.

Eine erfindungsgemäße Applikatoreinrichtung besitzt mindestens zwei Applikatorelemente, die hinsichtlich ihrer räumlichen Geometrie einstückig und genau vorbestimmbar im Kunststoffspritzgussverfahren oder auch in einem 3D-Druckverfahren hergestellt sind. Hierdurch gelingt es, die Raumform der Applikatorelemente und damit auch die Anordnung und Raumform der Auftragsorgane, insbesondere der Borsten, genau vorherzubestimmen und durch Bildung von Überlappungszonen Ü bei der Anordnung einzelner erfindungsgemäßer Applikatorelemente zu einer erfindungsgemäßen Applikatoreinrichtung die Gestalt, die räumliche Lage und die Größe einer Überlappungszone Ü von Auftragsorganen vorherbestimmt zu verwirklichen.

Hierzu sind die Applikatorelemente entlang einer Längsachse L der Applikatoreinrichtung aufeinanderfolgend benachbart angeordnet, wobei die Applikatorelemente Auftragsorganfelder BF besitzen, die ein Umhüllungsvolumen U definieren. Die Auftragsorganfelder zweier benachbarter Applikatorelemente überlappen zumindest teilweise und bilden so eine Überlappungszone Ü. Hierdurch entstehen bei der Applikatoreinrichtung Bereiche, die nach dem Eintauchen einer erfindungsgemäßen Applikatoreinrichtung in eine Mascaramasse und dem sich üblicherweise anschließenden Abstreifvorgang beim Herausziehen eines Mascaraapplikators aus einem Mascarabehälter in **besonderer** Art und Weise vor dem Abstreifen und somit vor einem unerwünschten Abtragen von Mascaramasse beim Herausziehen des Applikators aus dem Behälter geschützt sind. In diesen Bereichen verbleibt also auch nach einem Abstreifvorgang eine größere Menge an Mascaramasse, die für das Auftragen der Masse auf die Wimpern einer Benutzerin zur Verfügung steht.

Die Längsachse L der Applikatoreinrichtung ist bevorzugt koaxial zu einer Längsachse eines Kosmetikapplikators enthaltend die Applikatoreinrichtung angeordnet. Die Längsachse L kann aber auch parallel zur Längsachse des Kosmetikapplikators versetzt oder winklig zu dieser, insbesondere rechtwinklig hierzu verlaufen.

Die Überlappungszone wird bei einer erfindungsgemäßen Applikatoreinrichtung durch sich überkreuzende oder ineinanderragende Auftragsorgane benachbarter Applikatorelemente erreicht, was zur Folge hat, dass eine erfindungsgemäße Applikatoreinrichtung zumindest teilbereichsweise sich kreuzende oder überlappende Auftragsorgane hat, was insbesondere für eine verbesserte Rundumbenetzung der Wimpern einer Benutzerin vorteilhaft ist.

Die Überlappungszone Ü ist aus Umhüllungsvolumina U zweier benachbarter Applikatorelemente gebildet und stellt eine Schnittmenge dieser Umhüllungsvolumina dar, wobei die Überlappungszone Ü insbesondere eine scheibenförmige Raumform mit konstanter und/oder gleichförmiger Dicke, die einer Überlappungslänge X entspricht, hat. Bei einer derartigen Ausgestaltung einer erfindungsgemäßen Applikatoreinrichtung ist von besonderem Vorteil, dass die Massespeicherfähigkeit und auch das Wimpernbenetzungsvermögen der Applikatoreinrichtung in Umfangsrichtung im Bereich der Überlappungszonen Ü gleichartig und symmetrisch gleich verteilt sind.

Die erfindungsgemäß gewählte Möglichkeit, eine bestimmte vorbestimmbare Massespeicher- und/oder Benetzungscharakteristik der erfindungsgemäßen Applikatoreinrichtung zu erreichen, besteht darin, dass die Überlappungszone Ü bzgl. einer Längsachse L rotationssymmetrisch ausgebildet ist.

Als in der Praxis gut realisierbare und mit guten Ergebnissen versehene Ausführungsform hat sich bewährt, eine Überlappungslänge X der Überlappungszone Ü so zu bemessen, dass für die Überlappungslängen X gilt 0 mm ≤ X ≤ 5 mm, insbesondere 0 mm ≤ X ≤ 3,5 mm, besonders bevorzugt 0 mm ≤ X ≤ 1,5 mm. Sofern sich die Überlappungszonen Ü lediglich berühren, was ausdrücklich im Bereich der Erfindung liegt, gilt, dass die Überlappungslänge X = 0 mm ist.

In einer weiteren Ausführungsform der Erfindung kann die Überlappungslänge X entlang der Radialrichtung der Applikatoreinrichtung gesehen, veränderlich sein. Als Beispiel kann hierfür eine keilförmige Ausgestaltung der Überlappungszone Ü dienen. Abgesehen von der keilförmigen Ausgestaltung der Überlappungszone Ü, sind selbstverständlich auch weitere Raumformen der Überlappungszone Ü denkbar, die ebenfalls eine in Radialrichtung veränderliche Überlappungslänge X besitzen.

Um eine besonders symmetrische Verteilung der Masseaufnahme- und/oder Benetzungscharakteristik zu erreichen, kann es sinnvoll sein, dass die Umhüllungsvolumina U der Applikatorelemente volumenmäßig jeweils prozentual den gleichen Beitrag zur Überlappungszone Ü bereitstellen.

Gleichwohl ist es selbstverständlich auch möglich, ein z.B. in Längsrichtung besonders großes Borstenfeld eines ersten Applikatorelements mit einem volumenmäßig besonders kleinen Borstenfeld eines zweiten Applikatorelements ineinanderragen zu lassen, so dass die Umhüllungsvolumina der Applikatorelemente mit unterschiedlich großen prozentualen Anteilen an der Bildung der Überlappungszone beteiligt sind. So können z.B. entlang der Längsachse L einer Applikatoreinrichtung Bereiche realisiert werden, in denen eine Häufung von Überlappungszonen vorhanden ist, und andere Bereiche, die beispielsweise durch ein sehr großes (langes) Applikatorelement überbrückt werden, keine oder nur wenige Überlappungszonen vorgesehen werden, was sich selbstverständlich entlang der Länge der Applikatoreinrichtung auf deren Charakteristik auswirkt.

In einer besonderen Ausführungsform der Erfindung sind Reservoirvolumen R innerhalb der Überlappungszone Ü durch die Auftragsorgane und zumindest Teilbereiche von Basisteilen der Applikatorelemente umgrenzt.

In weiterhin bevorzugter Art und Weise sind insbesondere ein Applikatorelement und ein Trägerteil zur Aufnahme weiterer Applikatorelemente einstückig ausgebildet.

Die Applikatorelemente sind vorteilhafterweise als Kunststoffspritzgussteile, insbesondere im Ein- oder Mehrkomponentenverfahren hergestellt, wobei beispielsweise die Borsten/Auftragsorgane der Applikatorelemente aus einem anderen Werkstoff hergestellt werden können, als deren Basisteile. Gleichfalls geeignet, insbesondere für Kleinserien, zur Herstellung eines erfindungsgemäßen Applikatorelements sind bekannte 3D-Druckverfahren.

Hinsichtlich der Anordnung der Applikatorelemente auf der Längsachse L kann es zweckmäßig sein, dass zumindest ein Applikatorelement bzgl. des Trägerteils wenigstens um einen gewissen Betrag drehbar um die Längsachse auf dem Trägerteil sitzt. Hierdurch können beim Zusammenfügen und Anordnen mehrerer Applikatorelemente auf einem Trägerteil Kollisionen von Borsten ineinanderragender Borstenfelder vermieden werden, so dass Borsten des einen Borstenfeldes in Zwischenräume des anderen Borstenfeldes ragen können.

Die Auftragsorgane sitzen in bevorzugter Art und Weise umlaufend um das Basisteil des Applikatorelements in Reihen angeordnet, wobei bevorzugt die Auftragsorgane 9 in zumindest einer Reihe senkrecht auf der Längsachse L stehen. Weitere Reihen von Auftragselementen schließen bevorzugt einen spitzen Winkel zur Längsachse L ein, wobei dieser spitze Winkel α insbesondere im Bereich zwischen 30° und 90°, besonders bevorzugt in einem Bereich zwischen 40° und 80° liegt.

Bevorzugt ist, dass das Trägerteil einen Aufnahmebereich zur Aufnahme von Applikatorelementen besitzt und Mittel zum axialen Festlegen der Applikatorelemente hat, so dass die Applikatorelemente nach dem Aufsetzen auf das Trägerteil in axialer Richtung nicht mehr oder nur unwesentlich verrutschen können. Hierzu kann beispielsweise ein ringwulst- oder nasenartiger Vorsprung, oder z.B. nach Art eines Widerhakens, am Trägerteil dienen, der bei der Montage in Nuten einer Durchgangsbohrung der Basisteile eingreift. Alternativ kann auch ein Klemmsitz vorgesehen sein.

Sofern es gewünscht ist, die Applikatorelemente auf dem Trägerteil in Umfangsrichtung verdrehfest anzuordnen, kann beispielsweise für den Anbindungsbereich ein von einem zylindrischen Querschnitt abweichender Querschnitt des Trägerteils gewählt werden, der mit einem entsprechenden korrespondierenden Querschnitt einer Durchgangsöffnung in den Applikatorelementen korrespondiert, so dass eine verdrehsichere Festlegung der Applikatorelemente erfolgt. Beispielsweise eignen sich hierzu ovale oder polygone Querschnitte des Aufnahmebereichs.

Mittelachsen der die Überlappungszone Ü bildenden Auftragsorgane zweier benachbart angeordneter Applikatorelemente schließen zueinander einen Winkel β ein, wobei der Winkel β vorteilhafter Weise zwischen 20° und 130°, insbesondere zwischen 40° und 110° liegt. Innerhalb dieser Winkelbereiche kann eine "Überdachung" des Reservoirvolumens R durch die Auftragsorgane hinsichtlich der maximalen radialen Höhe der Reservoirvolumen gemessen von der Längsachse L aus in weiten Grenzen eingestellt werden.

Zweckmäßigerweise besitzen die Applikatorelemente ein Basisteil, von dem die Borsten/die Auftragsorgane abgehen und das Basisteil weist zum Aufstecken auf das Trägerteil bevorzugt eine Durchgangsöffnung auf. Bevorzugt besitzt das Basisteil einen Verdickungsbereich, wobei vom Verdickungsbereich die Auftragsorgane/Borsten abgehen. Der Verdickungsbereich ist zweckmäßigerweise z.B. konkav nach außen gewölbt ausgestaltet.

Zweckmäßigerweise gehen die Auftragsorgane/Borsten von einer Außenoberfläche des Verdickungsbereichs/Basisteils senkrecht ab, was sich auf die Herstellbarkeit, insbesondere auf die Entformbarkeit der Applikatorelemente positiv auswirkt, wenn diese spritzgegossen werden. Sofern ein 3D-Druckverfahren verwendet wird, muss auf die Entformbarkeit keine Rücksicht genommen werden, was auch hinterschnittbehaftete Applikatorelemente ermöglicht.

Weiterhin ist es ein Vorteil der Erfindung, dass diese ohne Weiteres durch Anordnen mehrerer, auch verschiedener Applikatorelemente in nahezu beliebiger Weise zusammengesetzt werden kann. Die Applikatorelemente können sich dabei hinsichtlich einer Länge h der Auftragsorgane, der Härte, der Geometrie der Auftragsorgane oder des Besatzes mit Auftragsorganen oder hinsichtlich der Bauart unterscheiden. Im Bereich der Erfindung liegt es auch, beispielsweise ein Applikatorelement, welches im Einkomponentenspritzgussverfahren hergestellt ist; mit einem anderen Applikatorelement, welches beispielsweise im Zweikomponentenspritzgussverfahren oder z.B. im 3D-Druck hergestellt ist, zu kombinieren.

Eine weitere Voraussetzung der Erfindung ist es, zur Ausbildung einer erfindungsgemäßen Applikatoreinrichtung geeignete Applikatorelemente zur Verfügung zu stellen.

Ein erfindungsgemäßes Applikatorelement weist eine Vielzahl von Auftragsorganen auf und ist zur axial aufeinanderfolgenden Anordnung entlang einer Längsachse einer Applikatoreinrichtung geeignet ausgebildet, wobei hierfür zumindest ein Teil der Auftragsorgane so angeordnet und/oder ausgebildet ist, dass freie Enden der Auftragsorgane eine axiale Länge 1 eines Basisteils in axialer Richtung zumindest ein Stück überragen oder mit diesem bündig abschließen. Hierdurch werden also zumindest einendig über ein Basisteil herausragende oder bündig abschließende Auftragsorgane vorgesehen, die beim Aneinandersetzen mit anderen Applikatorelementen, die ebenfalls überragende oder bündig abschließende Borsten/Auftragsorgane aufweisen, im Zusammenspiel eine Überlappungszone Ü im Sinne der Erfindung bilden können.

Dabei bilden die Auftragsorgane bevorzugt ein Borstenfeld BF/Umhüllungsvolumen U, welches eine Längserstreckung 1' bzgl. der Längsachse L des Applikatorelements aufweist, wobei die Längserstreckung 1' zumindest gleich, insbesondere größer ist als die Längserstreckung 1 des Basisteils des Applikatorelements.

Eine hieraus resultierende Differenz 1'-1 bildet die Überragungslänge bzgl. der Längserstreckung des Basisteils, wobei die Überragungslänge in bevorzugter Art und weise in Axialrichtung symmetrisch zum Basisteil angeordnet ist. Dies bedeutet, dass die Enden der Auftragsorgane das Basisteil des Applikatorelements beidendig in gleichem Maße überragen. Gleichwohl kann ein durch das Borstenfeld BF gebildetes Umhüllungsvolumen U bzgl. der Längserstreckung des Basisteils unsymmetrisch angeordnet sein, so dass beispielsweise das Borstenfeld einendig das Basisteil nicht überragt, insbesondere bündig abschließt und die gesamte Differenz/Überragungslänge 1-1' einseitig über eine Stirnseite des Basisteils ragend angeordnet ist.

Dabei kann das Umhüllungsvolumen bzgl. der Längsachse L des Applikatorelements auch exzentrisch angeordnet sein.

Bei einer anderen Ausführungsform des Applikatorelements weist das Umhüllungsvolumen U in Umfangsrichtung um die Längsachse L eine konstante oder veränderliche radiale Erstreckung auf.

Zur Ausbildung unterschiedlicher Applikatorelemente können die Auftragsorgane beispielsweise Abschnitte einer Scheibe, Zinken, Borsten, gezahnte Scheibensegmente oder Zähne sein.

Im Ergebnis stellt die Erfindung einen Kosmetikapplikator, insbesondere einen Mascaraapplikator zur Verfügung, der zumindest ein Griff teil, eine Applikatorstange und eine erfindungsgemäße Applikatoreinrichtung aufweist.

Außerdem gehört zum Bereich der Erfindung eine Kosmetikeinheit mit einem Behälter zur Aufnahme von Mascaramasse, gegebenenfalls einer Abstreifeinrichtung, welche zumindest eine Applikatoreinrichtung gemäß der Erfindung besitzt oder einen Kosmetikapplikator nach der Erfindung aufweist.

Im Folgenden wird die Erfindung anhand der Zeichnung beispielhaft näher erläutert. Es zeigen:
- Figur 1:: einen Kosmetikapplikator, insbesondere einen Mascaraapplikator, aufweisend eine erfindungsgemäße Applikatoreinrichtung in einer schematisierten Seitenansicht;
- Figur 2:: eine vergrößerte Darstellung der erfindungsgemäßen Applikatoreinrichtung gemäß Figur 1 in einer Seitenansicht;
- Figur 3:: ein erstes erfindungsgemäßes Applikatorelement für eine erfindungsgemäße Applikatoreinrichtung in einem Längsschnitt durch eine Längsmittenebene A-A gemäß Figur 2 in schematischer, stark vergrößerter Darstellung;
- Figur 4:: eine Anordnung zweier erfindungsgemäßer Applikatorelemente gemäß Figur 3 in einer Längsschnittdarstellung entlang der Ebene A-A aus Figur 2 in schematischer, stark vergrößerter Ansicht;
- Figur 5:: ein zweites erfindungsgemäßes Applikatorelement in einem Längsschnitt entlang der Ebene A-A gemäß Figur für eine erfindungsgemäße Applikatoreinrichtung;
- Figur 6:: einen Längsschnitt entlang der Ebene A-A aus Figur 2 durch eine stark schematisierte Ausführungsform der erfindungsgemäßen Applikatoreinrichtung und
- Figur 7:: eine weitere Ausführungsform der erfindungsgemäßen Applikatoreinrichtung in einem Längsschnitt entlang der Ebene A-A aus Figur 2 in schematischer Darstellung.

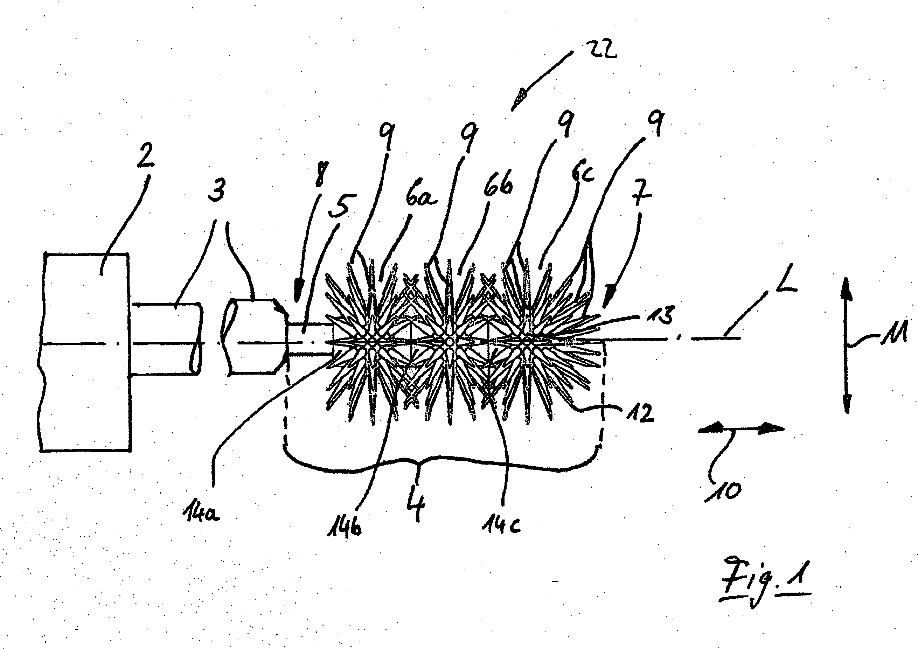

Ein in Figur 1 dargestellter Kosmetikapplikator 22 weist in bekannter Art und Weise ein Griffteil 2, eine Applikatorstange 3 sowie eine Längsachse L auf. Der Kosmetikapplikator 22 besitzt eine erfindungsgemäße Applikatoreinrichtung 4 mit einem Trägerteil 5 und mehreren erfindungsgemäßen Applikatorelementen 6a, 6b, 6c. Im Ausführungsbeispiel ist die Längsachse L gemeinsame Längsachse L für den Kosmetikapplikator 22 und die Applikatoreinrichtung 4. Die Längsachsen des Kosmetikapplikators und der Applikatoreinrichtung 4 können aber auch parallel versetzt sein oder winklig, insbesondere rechtwinklig zueinander verlaufen. Das Applikatorelement 6c bildet dabei ein distales Ende 7 der Applikatoreinrichtung 4 und des Kosmetikapplikators 22. Das Applikatorelement 6a sitzt im Bereich eines proximalen Endes 8 der Applikatoreinrichtung 4. Das Griff teil 2 bildet ein proximales Ende des Kosmetikapplikators 22.

Im Folgenden werden die Begriffe "distal" im Sinne von "vom Griffteil 2 abgewandt" bzw. "weiter von diesem entfernt liegend" und der Begriff "proximal" als "dem Griff teil zuweisend" oder "bzgl. der Längsachse L liegend im Vergleich zu anderen Elementen näher beim Griff teil 2" verwendet.

Jedes der Applikatorelemente 6a, 6b, 6c weist eine Vielzahl von Auftragsorganen 9 auf, welche im Ausführungsbeispiel als Borsten ausgebildet sind.

Unter Auftragsorgane 9 gemäß der Erfindung fallen allerdings auch andere nicht als Borsten ausgestaltete Organe, beispielsweise Scheibensegmente, Zinken, Zähne, Borsten mit verdickten freien Enden, gezahnte Scheibensegmente oder gezahnte Scheiben. Die Auftragsorgane haben im Falle eines Mascaraapplikators die Aufgabe, die in einem Behälter befindliche Mascaramasse (nicht gezeigt) durch Eintunken/Eintauchen des Kosmetikapplikators 22 aufzunehmen und anschließend gegebenenfalls nach einem Abstreifvorgang diese so aufgenommene Mascaramasse beispielsweise an Augenwimpern zum Erzielen eines kosmetischen Effekts wieder abzugeben.

Im Folgenden wird zur Vereinfachung anstelle des Begriffs "Auftragorgane" der Begriff "Borsten" verwendet, wobei diese Begriffsverwendung keine Einschränkung darstellen soll. Anstelle von Borsten können auch andere Arten von Auftragsorganen (wie oben beschrieben) vorgesehen sein.

Die Applikatorelemente 6a, 6b, 6c sind auf dem Trägerteil 5 angeordnet und relativ zu diesem zumindest in einer Axialrichtung 10 festgelegt befestigt. Das Trägerteil 5 sitzt mit seinem proximalen Ende in üblicher Art und Weise in der Applikatorstange 3 fest, wobei die Applikatorstange 3 wiederum fest mit dem Griffteil 2 verbunden ist.

Die Applikatorelemente 6a, 6b, 6c sind entlang der Längsachse L gelenklos, idealerweise zueinander schwenkstarr oder in engen Grenzen relativ zueinander biegbar auf der Längsachse L angeordnet.

Neben der Axialrichtung 10, die parallel zur Längsachse L des Kosmetikapplikators 22 bzw. der Applikatoreinrichtung 4 ausgerichtet ist, wird für die nachfolgende Beschreibung eine Radialrichtung 11 definiert, welche senkrecht auf der Längsachse L steht.

Im Ausführungsbeispiel ist die Längsachse L als Gerade gezeigt, gleichwohl können erfindungsgemäße Applikatoreinrichtungen 4 zur Ausbildung eines Kosmetikapplikators 22 auch entlang einer zumindest im Bereich der Applikatoreinrichtung 4 gekrümmten oder sogar gewellten Längsachse L angeordnet sein.

Die Borsten 9 besitzen jeweils ein freies Ende 12 und einen Borstenfuß 13, mit dem sie an einem Basisteil 14a, 14b, 14c der Applikatorelemente 6a, 6b, 6c befestigt sind.

Die Applikatorelemente 6a bis 6c, d.h. insbesondere die Basisteile 14a, 14b, 14c mit ihren zugehörigen Borsten 9 sind als Kunststoffspritzgussteil einteilig ausgebildet, wobei jeweils das Basisteil 14a, 14b, 14c und die ihnen zugehörigen Borsten 9 aus ein und demselben Kunststoffmaterial hergestellt sein können. Dies bedeutet, dass ein solches Applikatorelement 6a, 6b, 6c im Einkomponentenspritzgussverfahren hergestellt ist.

Gleichwohl können die Applikatorelemente 6a bis 6c beispielsweise für das zugehörige Basisteil 14a, 14b, 14c ein erstes Kunststoffmaterial aufweisen und für die jeweils zugehörigen Borsten 9 ein zweites Kunststoffmaterial besitzen, so dass solche Applikatorelemente 6a, 6b, 6c im Zwei- oder Mehrkomponentenspritzgussverfahren oder in einem anderen Herstellverfahren, z.B. dem 3D-Druck hergestellt sind.

Besonders bietet es sich an, den Kunststoff für die Borsten 9 etwas weicher und biegsamer zu wählen als denjenigen Kunststoff, der die Basisteile 14a, 14b, 14c bildet.

Wie weiter unten noch detaillierter beschrieben werden wird, berühren und/oder überlappen sich in einem Teilbereich zwischen den Applikatorelementen 6a und 6b sowie 6b und 6c jeweils deren Borsten 9.

In der zeichnerischen Darstellung gemäß den Figuren 1 und insbesondere 2 könnte der Eindruck erweckt werden, dass sich diese überlappenden Borsten kreuzend durchdringen. Dies ist natürlich in der Realität nicht der Fall. Diese zeichnerische Darstellung hat technische Gründe. In der Realität werden die Borsten selbstverständlich sich nicht durchdringend gegebenenfalls berührend oder nicht berührend nebeneinander anordnen. Dies folgt schon allein daraus, dass - wie weiter unten beschrieben werden wird - die Applikatorelemente 6a, 6b, 6c jeweils einzeln hergestellt werden und zu einer Applikatoreinrichtung 4, z.B. durch Auffädeln oder Aufstecken auf das Trägerteil 5 zusammenmontiert werden. Bei dieser Vorgehensweise findet selbstverständlich kein Verschmelzen oder Durchdringen der Borsten 9 statt. Vielmehr werden sich diese Borsten 9 gegebenenfalls unter geringfügiger Biegung oder beim Aufstecken der Applikatorelemente 6a, 6b, 6c in Umfangsrichtung mit geringem Versatz nebeneinander anordnen. Die in den Figuren dargestellte "gedachte" Durchdringung der Borsten ist Grundlage für eine sinnvolle Definition von Längen und Winkeln, da in dieser theoretischen Position sich Mittelachsen 9' der Borsten schneiden und somit eine Ebene definieren, so dass sie einen definierten Winkel zwischen sich einschließen. Somit wird die Definition von Längen und Winkeln, soweit es darauf ankommt, eine solche theoretische, gegebenenfalls durchdringende Anordnung der Auftragsorgane 9 angenommen, um Winkelverzerrungen oder Längenänderungen, die bei einer Projektion in eine Betrachtungsebene, z.B. die Zeichenebene der Längsschnitte A-A zu vermeiden.

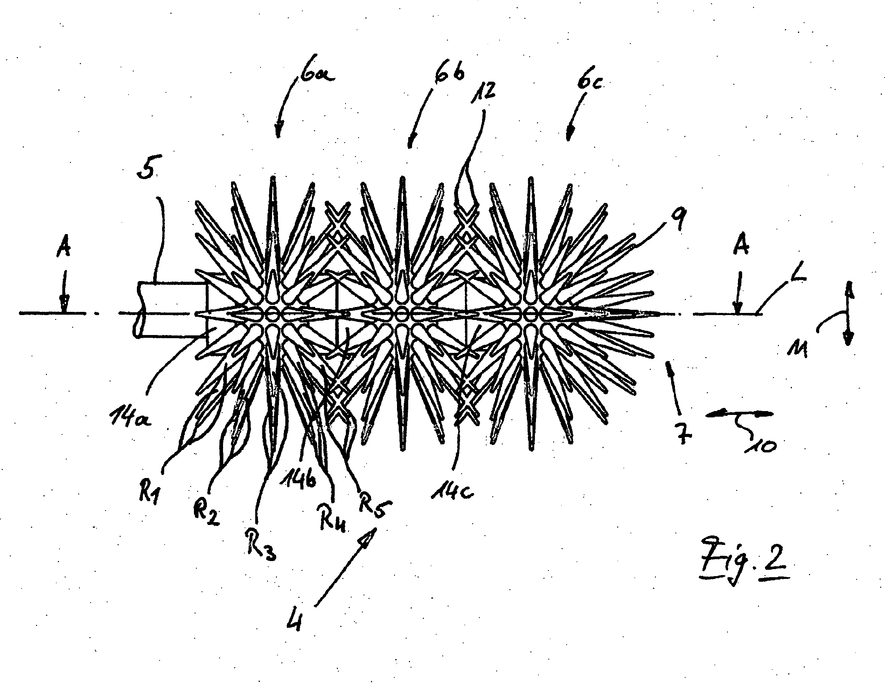

Die erfindungsgemäße Applikatoreinrichtung 4 gemäß Figuren 1 und 2 besitzt im gezeigten Ausführungsbeispiel zwei identische Applikatorelemente 6a, 6b sowie ein weiteres Applikatorelement abweichender Bauart 6c, wobei das Applikatorelement 6c am distalen Ende 7 angeordnet ist und proximal auf das Applikatorelement 6c folgend die jeweils baugleichen Applikatorelemente 6a, 6b auf dem Trägerteil 5 angeordnet sind. Das Applikatorelement 6c unterscheidet sich von den Applikatorelementen 6a,6b dahingehend, dass ein geänderter Borstenbesatz vorliegt, derart, dass das distale Ende 7 auch stirnseitig igelartig mit Borsten 9 besetzt ist. Selbstverständlich ist es auch möglich, das Applikatorelement 6c identisch zu den Applikatorelementen 6a und 6b auszubilden, wodurch natürlich dann eine Applikatoreinrichtung 4 entsteht, die an ihrem freien distalen Ende 7 keinen Borstenbesatz aufweist.

Die Borsten 9 sind bzgl. des Basisteils 14a, 14b, 14c jeweils umlaufend um die Basisteile 14a, 14b, 14c in Reihen angeordnet, wobei die Reihen zum Zwecke der Beschreibung im Folgenden mit R1, R2, R3, R4, R5 bezeichnet werden. Bevorzugt sind korrespondierende Borsten der Reihen R1, R2, R3, R4, R5 auch in Axialrichtung 10 in Reihen angeordnet. In Figur 2 sind jeweils mehrere Borsten 9 als zu den entsprechenden Reihen R1 bis R5 gekennzeichnet angezogen, damit klar wird, welche Borsten jeweils eine Reihe R1 bis R5 bilden. So gehen beispielsweise sämtliche Borsten 9 der Reihen R3 jeweils in Radialrichtung 11 senkrecht vom Basisteil 14a, 14b, 14c ab, wohingegen sämtliche Borsten der Reihe R2 winklig zur Radialrichtung 11 geneigt angeordnet sind, wobei die freien Enden 12 der Borsten zum proximalen Ende 8 hingeneigt sind. Sämtliche Borsten 9 der Reihe R1 sind ebenfalls gleichartig geneigt wie die Borsten 9 der Reihe R2, jedoch um einen etwas größeren Winkel. Die Borsten 9 der Reihe R4 sind bevorzugt symmetrisch zu den Borsten 9 der Reihe R2 entgegengesetzt geneigt ausgerichtet, so dass deren freie Enden 12 der Borsten 9 hin zum distalen Ende 7 weisen. Gleiches gilt für die Borsten der Reihen R5, wobei diese gegenüber den Borsten 9 der Reihe R4 stärker zum distalen Ende 7 hin relativ zur Radialrichtung 11 geneigt sind.

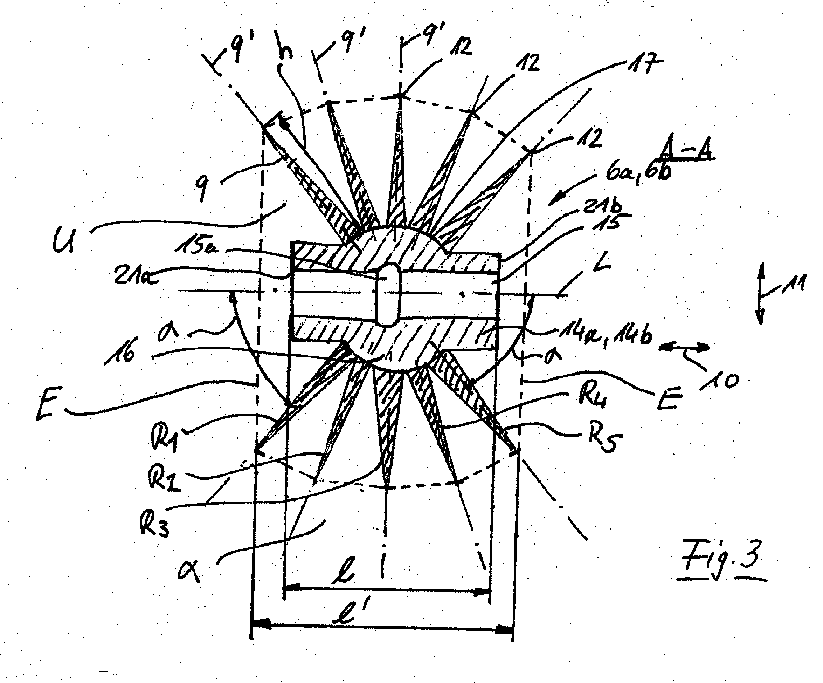

Im Folgenden wird anhand der Darstellung gemäß Figur 3 der Aufbau einer ersten Ausführungsform eines erfindungsgemäßen Applikatorelements 6a, 6b beschrieben.

Diese Applikatorelemente 6a, 6b besitzen das Basisteil 14a, 14b. Das Basisteil 14a, 14b besitzt eine axiale Längserstreckung 1 und ist beispielsweise als rohrzylinderförmiger Körper mit einer Durchgangsöffnung 15 ausgebildet. In der Durchgangsöffnung 15 ist eine Ringnut 15a angeordnet, welche zum axialen Festlegen der Applikatorelemente 6a, 6b auf dem Trägerteil 5 - wie weiter unten beschrieben wird - vorgesehen ist. In einem bezüglich der Längserstreckung 1 bevorzugt mittigen Bereich weist das Basisteil 14a, 14b eine wulstartige Verdickung 16 auf. Die Verdickung 16 ist beispielsweise eine kugelartige Verdickung 16 mit einer Außenoberfläche 17, von der sich die Borsten 9 mit ihren Mittelachsen 9' in etwa senkrecht wegerstrecken.

Sämtliche freien Enden 12 der Borsten 9 eines Applikatorelements 6a, 6b spannen ein gedachtes Umhüllungsvolumen U auf, welches schematisch mit einer gestrichelten Linie in der Figur 2 und den nachfolgend beschriebenen Figuren dargestellt ist.

Sämtliche Borsten 9 eines Applikatorelements 6a bis 6c bilden Borstenfelder BF, wobei jedes Borstenfeld BF das Umhüllungsvolumen U definiert. Das Umhüllungsvolumen U ist dabei als ein von den freien Enden 12 der Borsten aufgespanntes Volumen nach Art einer elastischen Haut ohne Einfallstellen und auch ohne Einbuchtungen oder Vertiefungen zu verstehen, welches insbesondere in Axialrichtung 10 durch gedachte Ebenen E begrenzt ist. Sofern sich also durch entsprechende Anordnung der Applikatorelemente 6a, 6b, 6c Umhüllungsvolumina U der jeweiligen Applikatorelemente berühren oder durchdringen, insbesondere auch nur teilweise durchdringen, so liegt ein Ineinanderragen bzw. ein Überlappen zweier der Borstenfelder BF benachbarter Applikatorelemente 6a, 6b, 6c in Sinne der Erfindung vor.

Die in Axialrichtung 10 gesehen äußersten Borsten 9 der Reihen R1 und R5 schließen in der Schnittdarstellung gemäß Figur 3 mit der Längsachse L einen spitzen Winkel α ein. Der Winkel α ist zweckmäßigerweise größer als 30° und kleiner als 90°, insbesondere beträgt der Winkel α mehr als 40° und weniger als 80°. Die Borsten 9 weisen eine Länge h vom Borstenfuß 13 bis zum freien Ende der Borste 12 gemessen auf, wobei die Länge h der Borsten 9 1 mm bis 10 mm, insbesondere 1,5 mm bis 6 mm beträgt. Erfindungsgemäß sind zumindest die in Axialrichtung 10 äußersten Borsten 9 der Reihen R1 und R5 hinsichtlich des Winkels α und ihrer Borstenlänge h derart ausgebildet, dass das Umhüllungsvolumen U, welches eine axiale Längserstreckung 1' aufweist, so ausgebildet ist, dass seine Längserstreckung 1' gegenüber der Längserstreckung 1 des Basisteils 14a, 14b gleich oder größer ist. Wesentlich ist somit, dass die Längserstreckung des Applikatorelements 6a, 6b in Axialrichtung 10, gemessen an Borstenspitzen 12 der in Axialrichtung 10 äußersten Borsten gleich oder größer ist als die Längserstreckung 1 des Basisteils 14a, 14b, so dass zumindest einige Borsten 9 des Applikatorelements 6ä, 6b das Basisteil 14a, 14b in Axialrichtung 10 ein Stück überragen oder bündig mit den Stirnseiten 21a, 21b der Basisteile 14a, 14b, 14c abschließen.

Der axiale Überstand 1'-1 des Umhüllungsvolumens U gegenüber der axialen Längserstreckung 1 des Basisteils kann also entweder über die Wahl des Winkels α, über die Wahl der Längserstreckung h der Borsten 9 oder über die Wahl der Längserstreckung 1 des Basisteils in weiten Grenzen bestimmt werden. So kann beispielsweise die Differenz 1'- 1 dieser axialen Längserstreckungen maximiert werden, wenn bei gegebener Borstenlänge h und bei gegebenen Neigungswinkel α die axiale Längserstreckung 1 des Basisteils 14a, 14b verkleinert wird.

Im Extremfall kann das Basisteil 14a, 14b in Axialrichtung 10 auch lediglich nur aus einer Borste 9 tragenden Abschnitt gebildet sein. Im Ausführungsbeispiel ist ein solcher Abschnitt die Verdickung 16.

Des Weiteren liegt es im Bereich der Erfindung, den axialen Überstand 1'-1, wie im Ausführungsbeispiel, symmetrisch über die Stirnseiten überragend anzuordnen. Dies empfiehlt sich insbesondere wenn durch gleichartige Applikatorelemente 6a, 6b, 6c eine Applikatoreinrichtung 4 aufgebaut werden soll, die zwischen zwei Applikatorelementen 6a, 6b, 6c symmetrische und insbesondere gleichgroße Überlappungszonen Ü erreicht werden sollen.

Der axiale Überstand 1'-1 kann aber auch ungleichmäßig bzgl. der Längsachse L, z.B. als kleiner Überstand über eine erste Stirnfläche 21a und als größerer Überstand über die zweite Stirnfläche 21b ausgebildet sein.

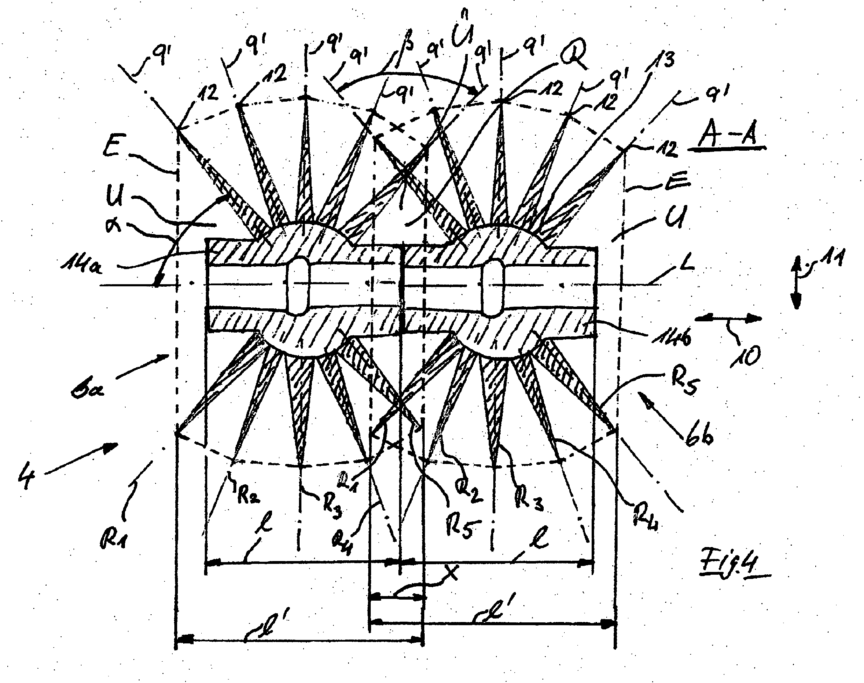

Im Folgenden wird anhand der Figur 4 eine Anordnung zweier erfindungsgemäßer Applikatorelemente 6a, 6b zu einer erfindungsgemäßen Applikatoreinrichtung 4 beschrieben. Dabei sind die Applikatorelemente 6a, 6b in Axialrichtung 10 mit den Stirnseiten ihrer Basisteile 14a, 14b aneinanderliegend angeordnet. Da die axiale Längserstreckung 1' des Umhüllungsvolumens U beider Applikatorelemente 6a, 6b jeweils größer ist als die axiale Längserstreckung 1 der Basisteile 14a, 14b, überlappen sich die Borstenfelder BF der beiden Applikatorelemente 6a, 6b in dem Bereich, in dem die Basisteile 14a, 14b, axial aneinander anliegen. Die Borstenfelder BF, d.h. die Umhüllungsvolumina U der Applikatorelemente 6a, 6b überlappen sich in Axialrichtung um einen Betrag X, der im Folgenden als Überlappungslänge X bezeichnet wird. Die Schnittmenge der Umhüllungsvolumina U der Applikatorelemente 6a, 6b über die Überlappungslänge X bildet eine Überlappungszone Ü, welche - wie in Figur 4 dargestellt-sich überkreuzende Borsten 9 enthält, wobei jeweils zumindest Teilbereiche von Borsten 9 der Reihe R5 des Applikatorelements 6a und Teilbereiche der Borsten 9 der Reihe R1 des Applikatorelements 6b innerhalb der Überlappungszone Ü liegen. Dieser durch sich überkreuzende Borsten- 9 bzw. sich überlappende Borstenfelder BF oder Umhüllungszönen U gebildete Bereich dient beim Benetzen einer erfindungsgemäßen Applikatoreinrichtung 4 mit Mascaramasse innerhalb des Behälters insbesondere als wirksamer Massespeicher, der auch beim Herausziehen der Applikatoreinrichtung hindurch gegebenenfalls durch eine Abstreifeinrichtung aus dem Behälter zuverlässig Mascaramasse in größerer Menge behält. Insbesondere ist durch die Borsten 9 und Teilbereiche der Basisteile 14a, 14b, 14c hierfür ein Reservoirvolumen unbegrenzt.

Des Weiteren dient diese Überlappungszone Ü mit sich kreuzenden Borsten 9 beim Applizieren von aufgenommener Mascaramasse an Wimpernhaare in besonders vorteilhafter Weise dazu, dass eine gute, über weite Bereiche des Umfangs einer Wimper hinweg reichende Benetzung der Wimper mit Mascaramasse, erfolgt, was insbesondere daran liegt, dass zumindest einige, je nach Größe und Gestalt der Überlappungszone Ü auch mehrere oder eine Vielzahl von wimpern durch sich kreuzende Borsten 9 berührt wird und somit eine verbesserte Benetzung der Wimpern mit Mascaramasse erfolgt.

Im dargestellten Beispiel gemäß Figur 4 ist nur jeweils eine Borstenreihe R5 des einen Applikatorelements 6a und eine Borstenreihe R1 des zweiten Applikatorelements 6b an der Bildung der Überlappungszone Ü beteiligt. Selbstverständlich ist es auch möglich, durch geeignete Wahl des Winkels α, der Borstenlänge h und der Differenz der Längen 1' - 1, zu erreichen, dass auch benachbarte Borstenreihen R4 des Applikatorelements 6a und R2 des Applikatorelements 6b an der Bildung der Überlappungszone Ü beteiligt sind. In einem solchen Fall wird die Anzahl der Kreuzungsstellen zwischen benachbarten Borsten 9 oder sich überlappenden Borsten 9 erhöht, so dass die oben beschriebenen Effekte verstärkt auftreten.

Es liegt also ohne Weiteres im Bereich der Erfindung, die Überlappungszone Ü bzw. die Überlappungslänge X derart zu wählen, dass eine Vielzahl der Borsten 9 von benachbarten Applikatorelementen 6a, 6b sich überlappen und sich so die Borstenfelder BF der Applikatorelemente um ein größeres Maß durchdringen. Ist die Überlappungslänge X = 0, so liegt ein Berühren der Enthüllungsvolumina U vor, was ebenfalls im Bereich der Erfindung liegt. Die Überlappungslänge X beträgt erfindungsgemäß 0 mm bis 5 mm, insbesondere 0 mm bis 3,5 mm, oder 0 mm bis 1,5 mm und kann etwa 0 % bis 50 %, bevorzugt 10 % bis 40 %, besonders bevorzugt 30 % der Längserstreckung 1' des Umhüllungsvolumens U betragen. Je größer die Überlappungslänge X im Verhältnis zur Längserstreckung 1' des Umhüllungsvolumens U ist, desto größer ist der Massespeichereffekt, da eine größere Anzahl der Borsten 9 der Applikatorelemente 6a, 6b, 6c an der Bildung der Überlappungszone Ü beteiligt ist. Bei einer wahl der Überlappungslänge X von mehr als 50 % der Längserstreckung 1' des Umhüllungsvolumens U findet bei einer erfindungsgemäßen Applikatoreinrichtung 4, welche zweckmäßigerweise aus einer Mehrzahl, d.h. aus mehr als zwei erfindungsgemäßen Applikatorelementen 6a, 6b, 6c zusammengesetzt ist, eine zahlenmäßig starke Reduzierung der freistehenden, d.h. nicht an der Bildung der Überlappungszone Ü beteiligten Borsten 9 statt, was zu einer Verminderung des Separierungseffektes der erfindungsgemäßen Applikatoreinrichtung 4 führen kann. Insbesondere die freistehenden, d.h. sich nicht mit anderen Borsten 9 kreuzende Borsten 9 sind dafür verantwortlich, dass Augenwimpern bei der Behandlung mit einem erfindungsgemäßen Applikator kämmend voneinander getrennt werden und so eine Separierung stattfindet. Insoweit hat sich die Größe der Überlappungslänge X in einem Bereich zwischen 0 % und 50 % der Längserstreckung 1* des Umhüllungsvolumens U besonders bewährt.

Mittelachsen 9' sich überkreuzender Borsten 9, welche an der Beteiligung der Überlappungszone Ü beteiligt sind, schließen unter der theoretischen Annahme, dass sich beide Mittelachsen 9' in einer gemeinsamen Ebene befinden, einen Winkel β ein. Als zweckmäßige Werte für den Winkel β haben sich 20° ≤ β ≤ 130°, insbesondere 40° ≤ β ≤ 110° bewährt. Insbesondere im letzteren Bereich ist die erfindungsgemäß gewollte umfängliche Benetzung der Wimpern mit Mascaramasse einerseits und andererseits die Massespeicherfähigkeit des Reservoirs R besonders optimiert. Je kleiner der Winkel β wird, desto mehr gleichen sich überlappende Borsten 9 der Charakteristik einer einzelnen Borste 9 an. Des Weiteren ist das Reservoirvolumen R durch besonders spitzwinklig gekreuzte Borsten 9 in Radialrichtung besonders ausgedehnt, wodurch beim Abstreifen einer erfindungsgemäßen Applikatoreinrichtung 4 zumindest ein Teil der im Reservoirvolumen R befindlichen Mascaramasse gegebenenfalls mit abgestreift werden kann.

Jedenfalls ist durch eine weite Variation des Winkels β die Charakteristik der erfindungsgemäßen Applikatoreinrichtung 4, was Massespeicherfähigkeit im Reservoirvolumen R und Separierungseffekt sowie eine mögliche Rundumbenetzung von Wimpern angeht,in weiten Grenzen vorbestimmbar einstellbar.

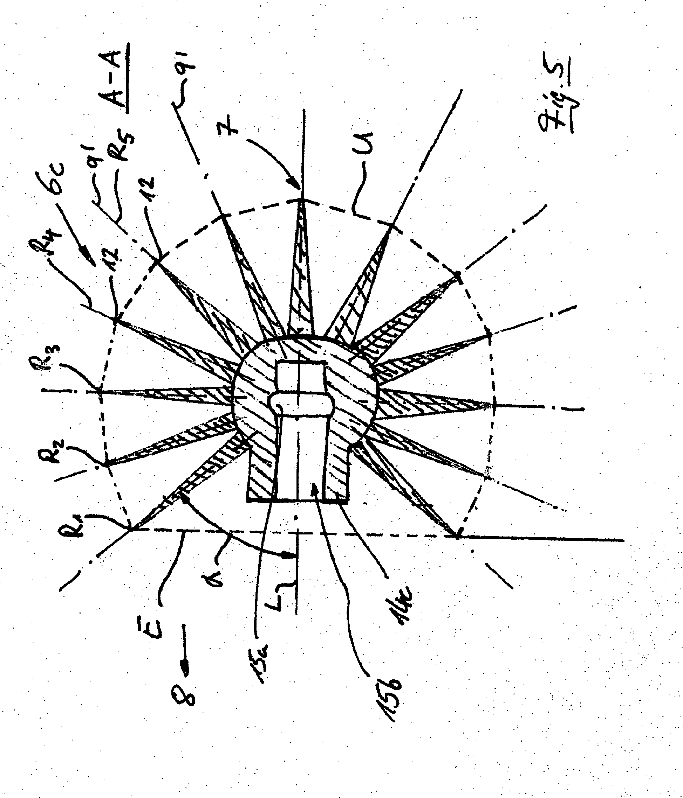

Figur 5 zeigt eine zweite Ausführungsform eines erfindungsgemäßen Applikatorelements 6c, welches insbesondere als Applikatorelement 6c im Bereich des distalen Endes 7 der Applikatoreinrichtung 4 geeignet ist. Zum proximalen Ende 8 der Applikatoreinrichtung 4 hin ist das Applikatorelement 6c hinsichtlich der Ausgestaltung des Basisteils 14c und hinsichtlich des Borstenbesatzes BF genauso ausgebildet, wie die Applikatorelemente 6a, 6b. Im Unterschied zu diesen Applikatorelementen 6a, 6b besitzt das Applikatorelement 6c im Bereich des distalen Endes 7 einen weiteren Borstenbesatz, so dass auch das distale Ende 7 der Applikatoreinrichtung 4 selbst als stirnseitiger Applikator nutzbar ist, da stirnseitig ein dichter Borstenbesatz vorliegt.

Weiterhin im Unterschied zu den Applikatorelementen 6a, 6b besitzt das Applikatorelement 6c anstelle der Durchgangsöffnung 15 eine Sacklochausnehmung 15b, welche ebenfalls eine Ringnut 15a besitzt. Mit der Sacklochausnehmung 15b kann das Applikatorelement 6c - wie weiter unten beschrieben werden wird - auf dem Trägerteil 5 befestigt werden.

Eine.erfindungsgemäße Applikatoreinrichtung 4 kann also, wie im Ausführungsbeispiel gemäß Figur 4 gezeigt, aus zumindest einem Applikatorelement 6a und einem Abschlussapplikatorelement 6c gemäß Figur 5 oder aus einer Mehrzahl von Applikatorelementen 6a, 6b und einem als Abschlussapplikatorelement fungierenden Applikatorelement 6c aufgebaut sein.

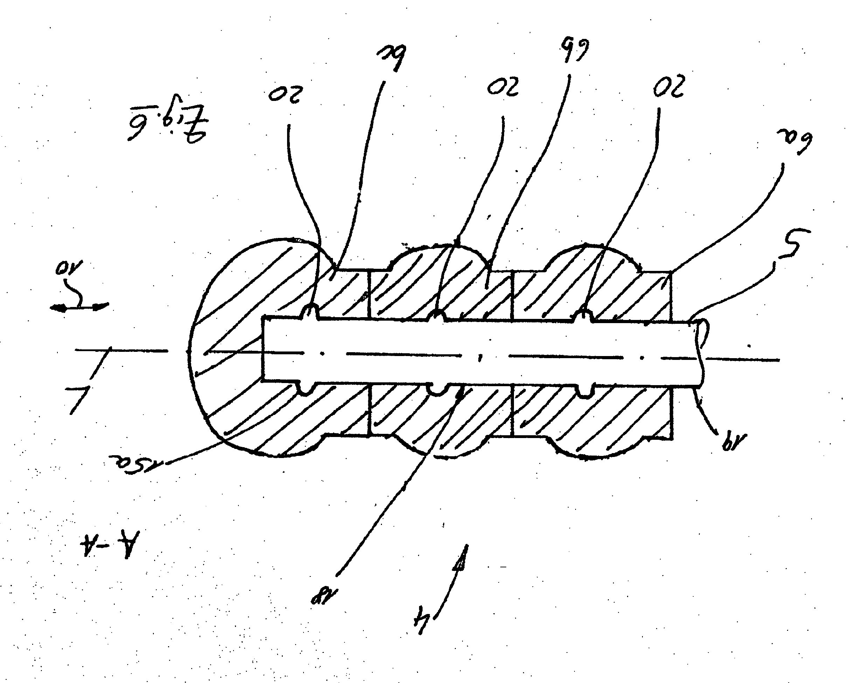

In Figur 6 ist eine erste Möglichkeit der befestigten Anordnung von Applikatorelementen 6a, 6b, 6c auf dem Trägerteil 5 der Applikatoreinrichtung 4 dargestellt.

Dazu sind die Applikatorelemente 6a, 6b, 6c stark vereinfacht, ohne Auftragsorgane 9 dargestellt.

Hierbei besitzt das Trägerteil 5 eine im Wesentlichen stabartige Raumform mit einem Aufnahmebereich 18 für die Applikatorelemente 6a, 6b, 6c und einem Anbindungsbereich 19 zur Verbindung mit der Applikatorstange 3. In Axialrichtung 10 voneinander beabstandet besitzt das Trägerteil ringwulst- oder nasenartige Vorsprünge 20. Die Vorsprünge 20 sind insbesondere radial umlaufend ausgebildet und korrespondieren mit den Ringnuten 15a in den Öffnungen 15, 15b der Applikatorelemente 6a, 6b, 6c. Durch Aufstecken der Applikatorelemente 6a, 6b, 6c in Axialrichtung 10 auf das Trägerteil 5 können die Vorsprünge 20 in die Ringnuten 15a einschnappen und somit das jeweilige Applikatorelement 6a, 6b, 6c zumindest in Axialrichtung 10 festlegend halten. Die Applikatorelemente 6a, 6b, 6c können in Umfangsrichtung relativ zum Trägerteil drehfest angeordnet sein. Denkbar ist jedoch, dass die Applikatorelemente 6a, 6b, 6c gegenüber dem Trägerteil 5 um die Längsachse 1 drehbar gelagert sind.

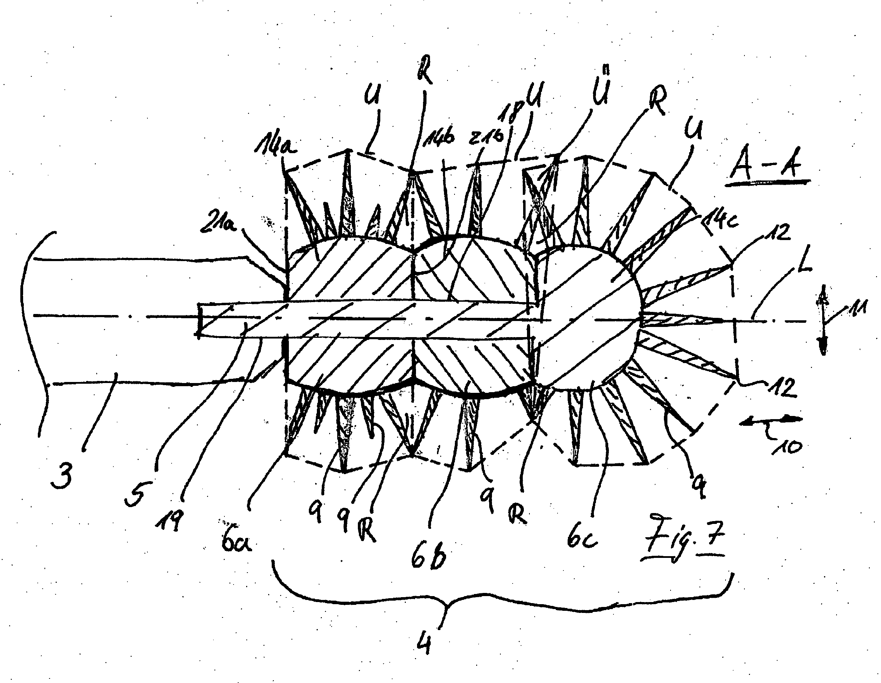

In Figur 7 ist eine weitere mögliche Ausführungsform einer erfindungsgemäßen Applikatoreinrichtung 4 mit erfindungsgemäßen Applikatorelementen gezeigt. Bei dieser Applikatoreinrichtung 3 ist das Applikatorelement 6c, welches den distalen Abschluss der Applikatoreinrichtung 4 bildet, einstückig mit dem Trägerteil 5 ausgebildet. Die übrigen Applikatorelemente 6a, 6b sind in Axialrichtung 10 aufeinanderfolgend am Applikatorelement 6c in distaler Richtung anliegend aufgefädelt. Im Bereich des proximalen Endes 8 der Applikatoreinrichtung sitzt die Applikatorstange 3 derart, dass ein freies (distales) Ende der Applikatorstange 3, die Applikatorelemente 6a, 6b zwischen der Applikatorstange 3 und dem Applikatorelement 6c axial festlegt.

Des Weiteren sind in Figur 7 beispielhaft einige Ausgestaltungen der Überlappungszone Ü, der Reservoirvolumen R und der Umhüllungsvolumina U dargestellt. Diesbezügliche Darstellungen und Ausführungen anhand des Ausführungsbeispiels gemäß Figur 7 sind selbstverständlich auf die gesamte Erfindung übertragbar und nicht auf die Ausführungsform gemäß Figur 7 beschränkt.

Anhand des Applikatorelements 6a gemäß Figur 7 wird klar, dass nicht sämtliche Borsten 9 des Applikatorelements am Aufspannen des zugehörigen Umhüllungsvolumens U beteiligt sein müssen. Einige der Borsten können beispielsweise kürzer sein als andere und somit innerhalb des Umhüllungsvolumens U liegen und nicht zum Aufspannen des Umhüllungsvolumens beitragen.

Beispielhaft ist anhand der Applikatorelemente 6a, 6b in Figur 7 dargestellt, dass die Umhüllungsvolumina U dieser beiden Applikatorelemente 6a, 6b derart ausgestaltet und zueinander angeordnet sind, dass sich die Umhüllungsvolumina U der Applikatorelemente 6a und 6b lediglich berühren, so dass eine Überlappungszone Ü gemäß der Erfindung entsteht, welche allerdings keine räumliche Ausdehnung hat. Gleichwohl werden beim Aneinandersetzen zweier Applikatorelemente 6a, 6b, wie sie in Figur 7 beispielhaft gezeigt sind, Reservoirvolumina R gebildet, die die oben genannten Vorteile bringen.

Anhand der Applikatorelemente 6b und 6c in Figur 7 ist wiederum lediglich beispielhaft dargestellt, wie z.B. eine keilförmige Überlappungszone Ü zwischen diesen beiden Applikatorelementen erreicht werden kann. Um den in der Zeichnung oberhalb der Längsachse L gezeichneten Bereich, weisen die Applikatorelemente 6b und 6c. Umhüllungsvolumina U auf, die sich überlappen und somit eine Überlappungszone Ü und damit auch ein Reservoirvolumen R bilden.

Auf der gegenüberliegenden Seite, also unterhalb der Längsachse L in Figur 7 dargestellt, sind die Borsten 9 der Applikatorelemente 6b und 6c so ausgebildet und angeordnet, dass sich die Umhüllungsvolumina U lediglich berühren. Hierdurch entsteht über die gesamte Applikatoreinrichtung 4 gesehen, zwischen den Applikatorelementen 6b und 6c eine keilförmige Raumform der Überlappungszone Ü. Relativ zur Längsachse L gesehen, sitzt diese Überlappungszone L auch exzentrisch.

Anhand der unterschiedlichen räumlichen Ausbildung der Überlappzone Ü mit einer Überlappungslänge von X = 0 zwischen den. Applikatorelementen 6a und 6b und mit einer in Radialrichtung veränderlichen Überlappungslänge X zwischen 0 und einem Maximalwert an der gegenüberliegenden Seite soll verdeutlicht werden, dass durch unterschiedliche Kombinationen unterschiedlich ausgestaltete erfindungsgemäße Applikatorelemente 6a, 6b, 6c ein breites Variationsspektrum zur Ausgestaltung der Überlappungszonen ermöglicht ist, was, wie oben bereits beschrieben, Auswirkungen auf die Massespeicherfähigkeit und auch auf die Fähigkeit der Wimpernbenetzung, insbesondere in der umfänglichen Wimpernbenetzung hat.

Weiterhin beispielhaft ist anhand der Figur 7 erläutert, dass beispielsweise die Applikatorelemente 6a, 6b als Basisteil 14 lediglich den vorbeschriebenen Verdickungsbereich 16, welcher konvex nach außen ausbildet ist, aufweisen und keinen sich daran anschließenden zylindrischen Bereich, wie dies in den vorangegangenen Ausführungsbeispielen dargestellt ist.

Selbstverständlich ist die Ausführungsform gemäß Figur 7 mit einem Basisteil, bestehend aus einem rohrzylindrischen Bereich und einem Verdickungsbereich, wie in der vorbeschriebenen Ausführungsform dargelegt, möglich und liegen ausdrücklich im Bereich der Erfindung.

Bei der erfindungsgemäßen Applikatoreinrichtung 4 ist von besonderem Vorteil, dass insbesondere durch den Aufbau der Applikatoreinrichtung aus spritzgegossenen Applikatorelementen es erstmals möglich ist, zum einen Überlappungszonen Ü, insbesondere in Axialrichtung 10 längenmäßig variable Überlappungszonen, vorzusehen und vorbestimmbar einzustellen, wobei nur an einigen wenigen charakteristischen Maßen und Gestaltungen der einzelnen Applikatorelemente Veränderungen vorzunehmen sind. Dies gelingt insbesondere, weil im Kunststoffspritzgussverfahren hergestellte Applikatorelemente besonders genau und besonders gut reproduzierbar immer wieder die gleiche Geometrie erhalten und der Borstenbesatz bzw. der Besatz mit Auftragsorganen regelmäßig ist und gleichbleibend ist. Dies ist im Gegensatz zu einem eher zufälligen Verteilen und Anordnen von Fasern im Beflockungsverfahren gemäß dem Stand der Technik.

Zudem bietet die Ausbildung der erfindungsgemäßen Applikatoreinrichtung aus Elementen, die im Spritzgussverfahren oder im 3D-Druck hergestellt werden, gegenüber bekannten Beflockungsverfahren viel größere und konstruktiv freiere Gestaltungsmöglichkeiten von Formen und Größen der Auftragsorgane.

Durch das Vorsehen einiger weniger verschiedenartiger Applikatorelemente, die sich beispielsweise in der geometrischen Raumform der Auftragsorgane, den Längen h der Auftragsorgane, den Neigungswinkeln α zur Längsachse des Applikatorelements unterscheiden, kann eine Vielzahl verschiedener Applikatoreinrichtungen baukastenartig zusammengestellt werden, wobei unterschiedlichste Massespeicher-, Separierungs- und Volumeneigenschaften dieser Applikatoreinrichtung vorbestimmbar einstellbar sind.

Insbesondere macht das Vorsehen von unsymmetrischen oder exzentrischen Anordnungen und/oder Raumformen der Überlappungszone Ü in einfacher Art und Weise die resultierenden Eigenschaften der Applikatoreinrichtung beeinflussbar. Hierdurch können insbesondere lokale Massespeicher z.B. auf einer Seite der Applikatoreinrichtung und z.B. auf der gegenüberliegenden Seite ein Applikatorabschnitt mit besonders guten Separierungseigenschaften zur Verfügung gestellt werden. Dies ist insbesondere bei einer keilförmigen Ausgestaltung der Überlappungszone Ü der Fall, wenn die Überlappungszone Ü beispielsweise lediglich auf einer Seite des Umfangs der Applikatoreinrichtung vorliegt und auf der anderen Seite des Applikators sich die benachbarten Borsten der Applikatorelemente nicht berühren oder sogar mit Abstand zueinander angeordnet sind.

Generell sei festgehalten, dass insbesondere auch für solche Kosmetikapplikatoren Schutz beansprucht wird, die sich über ihre anspruchsgemäßen Merkmale hinaus durch folgende weiteren Merkmale auszeichnen:
Kosmetikapplikator, der sich dadurch auszeichnet, dass die Überlappungszone (Ü) eine Überlappungslänge (X) besitzt, welche im Berührungsfall gleich 0 mm ist und im Überlappungsfall 0 mm < X < 5mm, insbesondere 0 mm < X < 3,5 mm, besonders bevorzugt 0 mm < X < 1,5 mm beträgt.

Kosmetikapplikator, der sich dadurch auszeichnet, dass die Überlappungslänge (X) in Radialrichtung (11) der Applikatoreinrichtung (4) veränderlich ist.

Kosmetikapplikator, der sich dadurch auszeichnet, dass die Umhüllungsvolumina (U) der Applikatorelemente (6a, 6b, 6c) hinsichtlich der Bildung der Überlappungszone (Ü) volumenmäßig prozentual den gleichen Beitrag bereitstellen.

Kosmetikapplikator, der sich dadurch auszeichnet, dass ein Trägerteil (5) zur Aufnahme zumindest eines Applikatorelements (6a, 6b, 6c) vorhanden ist und insbesondere das Trägerteil (5) und zumindest ein Applikatorelement (6a, 6b, 6c) einstückig ausgebildet sind.

Kosmetikapplikator, der sich dadurch auszeichnet, dass das zumindest eine Applikatorelement (6a, 6b, 6c) als Kunststoffspritzgussteil, insbesondere als Ein- oder Mehrkomponentenspritzgussteil oder als 3D-Druckbauteil aus Kunststoff ausgebildet ist.

### Bezugszeichenliste

- 1: Längserstreckung
- 1': Längserstreckung
- 2: Griffteil
- 3: Applikatorstange
- 4: Applikatoreinrichtung
- 5: Trägerteil
- 6a, 6b, 6c: Applikatorelemente
- 7: distales Ende
- 8: proximales Ende
- 9: Auftragsorgane/Borsten
- 9': Mittelachsen
- 10: Axialrichtung
- 11: Radialrichtung
- 12: freies Ende der Borste
- 13: Borstenfuß
- 14a, 14b, 14c: Basisteil
- 15: Durchgangsöffnung
- 15a: Ringnut
- 16: Verdickung
- 17: Außenoberfläche
- 18: Aufnahmebereich
- 19: Anbindungsbereich
- α: Winkel
- β: Winkel
- h: Länge
- L: Längsachse
- U: Umhüllungsvolumen
- BF: Borstenfelder
- X: Betrag (Überlappungslänge)
- Y: Betrag (Überlappungszone)
- Ü: Überlappungszone
- 20: Vorsprünge, Mittel
- 21a, 21b: Stirnseiten
- 1'-1: Überragungslänge, Differenz
- E: Ebene
- R: Reservoir
- 22: Kosmetikapplikator

## Patentansprüche

1. Kosmetikapplikator (22), insbesondere Mascaraapplikator, mit einer Applikatoreinrichtung mit zumindest zwei Applikatorelementen (6a, 6b, 6c), welche Auftragsorgane (9) aufweisen, wobei die Applikatorelemente (6a, 6b, 6c) als einstückige Kunststoffteile ausgebildet sind und ein Basisteil (14a, 14b, 14c) besitzen, von dem die Auftragsorgane (9) abgehen und das Basisteil (14a, 14b, 14c) eine Durchgangsöffnung (15) zum Aufstecken auf das Trägerteil (5) besitzt, wobei zumindest zwei Applikatorelemente (6a, 6b, 6c) axial aufeinanderfolgend entlang einer Längsachse (L) der Applikatoreinrichtung (4) angeordnet sind, wobei die Auftragsorgane (9) der Applikatorelemente (6a, 6b, 6c) Auftragsorganfelder (BF) bilden, die jeweils ein Umhüllungsvolumen (U) aufspannen, **dadurch gekennzeichnet, dass** sich zumindest zwei Umhüllungsvolumina (U) benachbart angeordneter Applikatorelemente (6a, 6b, 6c) derart überlappen und eine Überlappungszone bilden, die bzgl. der Längsachse (L) rotationssymmetrisch ausgebildet ist, dass die Auftragsorgane (9) innerhalb der Überlappungszone (Ü) ein Reservoirvolumen (R) umgrenzen, welches durch die Auftragsorgane (9) und einen Teilbereich von Basisteilen (14a, 14b, 14c) der Applikatorelemente (6a, 6b, 6c) begrenzt ist.

2. Kosmetikapplikator (22) nach Anspruch 1, **dadurch gekennzeichnet, dass** die Überlappungszone (Ü) aus Umhüllungsvolumina (U) zweier benachbarter Applikatorelemente (6a, 6b, 6c) gebildet ist und eine Schnittmenge dieser Umhüllungsvolumina (U) darstellt.

3. Kosmetikapplikator (22) nach einem der vorangegangenen Ansprüche, **dadurch gekennzeichnet, dass** die Überlappungszone (Ü) als Schnittmenge der Umhüllungsvolumina (U) benachbarter Applikatorelemente (6a, 6b, 6c) eine scheibenförmige Raumform mit konstanter und/oder gleichförmiger Dicke, die einer Überlappungslänge (X) entspricht, besitzt.

4. Kosmetikapplikator (22) nach einem der vorangegangenen Ansprüche, **dadurch gekennzeichnet, dass** die Überlappungszone (Ü) als Schnittmenge der Umhüllungsvolumina (U) benachbarter Applikatorelemente (6a, 6b, 6c) eine keilförmige Raumform besitzt.

5. Kosmetikapplikator (22) nach einem der vorangegangenen Ansprüche, **dadurch gekennzeichnet, dass** die Überlappungszone (Ü) bzgl. der Längsachse (L) exzentrisch versetzt angeordnet ist.

6. Kosmetikapplikator (22) nach einem der vorangegangenen Ansprüche, **dadurch gekennzeichnet, dass** die Überlappungszone (Ü) lediglich über einen Teil der Umfangsrichtung der Applikatoreinrichtung (4) reicht und in zumindest einem anderen, z.B. gegenüberliegendem Bereich keine Berührung/Überlappung der Umhüllungsvolumina (U) stattfindet.

7. Kosmetikapplikator (22) nach einem der vorangegangenen Ansprüche, **dadurch gekennzeichnet, dass** bezogen auf den prozentualen Anteil des Gesamtvolumens eines Umhüllungsvolumens (U), zwei benachbarte Umhüllungsvolumina (U) unterschiedlich stark zur Bildung der Überlappungszone (Ü) beitragen.

8. Kosmetikapplikator (22) nach einem der vorangegangenen Ansprüche, **dadurch gekennzeichnet, dass** zumindest ein Applikatorelement (6a, 6b, 6c) um die Längsachse (L) bzgl. eines anderen Applikatorelements (6a, 6b, 6c) drehbar ist, insbesondere drehbar auf dem Trägerteil (5) sitzt.

9. Kosmetikapplikator (22) nach einem der vorangegangenen Ansprüche, **dadurch gekennzeichnet, dass** die Auftragsorgane (9) radial umlaufend um ein Basisteil (14a, 14b, 14c) des Applikatorelements (6a, 6b, 6c) in Reihen (R1; R2; R3; R4; R5) angeordnet sind, wobei bevorzugt die Auftragsorgane (9) zumindest einer Reihe (R3) senkrecht auf der Längsachse (L) stehen.

10. Kosmetikapplikator (22) nach einem der vorangegangenen Ansprüche, **dadurch gekennzeichnet, dass** Reihen (R1; R2; R3; R4; R5) von Auftragsorgane (9) zur Längsachse (L) einen spitzen winkel (α) einschließen, insbesondere einen Winkel (α) zwischen 30° und 90°, besonders bevorzugt einen Winkel zwischen 40° und 80°.

11. Kosmetikapplikator (22) nach einem der vorangegangenen Ansprüche, **dadurch gekennzeichnet, dass** das Trägerteil (5) einen Aufnahmebereich (18) zur Aufnahme von Applikatorelementen (6ä, 6b, 6c) und Mittel (20) zum zumindest axialen Festlegen der Applikatorelemente (6a, 6b, 6c) bezüglich des Trägerteils (5) besitzt, wobei die Mittel (20) bevorzugt zumindest einen ringwulst- oder nasenartigen Vorsprung (20) aufweisen, die bei der Montage in Nuten (15) eingreifen, oder zumindest ein Klemmsitz ist, mit dem das zumindest eine Applikatorelement (6a, 6b, 6c) im montiertem Zustand festlegbar ist.

12. Kosmetikapplikator (22) nach einem der vorangegangenen Ansprüche, **dadurch gekennzeichnet, dass** Mittel (20) zur verdrehsicheren Festlegung der Applikatorelemente (6a, 6b, 6c) vorhanden sind, wobei die Mittel (20) zur verdrehsicheren Festlegung bevorzugt ein vom zylindrischen Querschnitt abweichender Querschnitt des Aufnahmebereiches (18) oder ein Klemmsitz der Applikatorelemente (6a, 6b, 6c) auf dem Trägerteil (5) ist, wobei der Querschnitt idealerweise polygon oder oval ist.

13. Kosmetikapplikator (22) nach einem der vorangegangenen Ansprüche, **dadurch gekennzeichnet, dass** Mittelachsen (9') der die Überlappungszone (Ü) bildenden Auftragsorgane (9) zweier Applikatorelemente (6a, 6b, 6c) einen Winkel (β) einschließen, wobei der Winkel (β) zwischen 20° und 130°, insbesondere zwischen 40° und 110°.

14. Kosmetikapplikator (22) nach einem der vorangegangenen Ansprüche, **dadurch gekennzeichnet, dass** das Basisteil (14a, 14b, 14c) zumindest einen Verdickungsbereich (16) besitzt, wobei die Borsten (9) vom Verdickungsbereich (16) abgehen und bevorzugt von einer Außenoberfläche (17) des Applikatorelements (6a, 6b, 6c) senkrecht abgehen.

15. Kosmetikapplikator (22) nach einem der vorangegangenen Ansprüche, **dadurch gekennzeichnet, dass** die Applikatoreinrichtung (4) aus zumindest zwei unterschiedlichen Applikatorelementen (6a, 6b, 6c) aufgebaut ist, wobei sich die Applikatorelemente (6a, 6b, 6c) idealerweise hinsichtlich der Länge (h), der Härte, der Geometrie der Auftragsorgane (9) oder des Besatzes mit Auftragsorganen (9) unterscheiden.

## Claims

1. Cosmetic applicator (22), in particular, mascara applicator including an applicator arrangement with at least two applicator elements (6a, 6b, 6c) which hold the application bodies (9), whereupon the applicator elements (6a, 6b, 6c) as one-piece plastic parts and comprising a core part (14a, 14b, 14c) from which the application bodies (9) emerge, and where each core part (14a, 14b, 14c) has a hole in the middle (15) to fit it onto the holding part (5), with at least two applicator elements (6a, 6b, 6c) aligned in sequence along the longitudinal axis (L) of the applicator arrangement (4), whereas the application bodies (9) on the applicator elements (6a, 6b, 6c) form fields of applicator bodies (BF), each of which spans an enveloping volume (U), **characterized by the fact that** at least two enveloping volumes (U) of applicator elements arranged alongside one another (6a, 6b, 6c) overlap in a particular way to form an overlap zone which is designed to be rotationally symmetrical along the longitudinal axis (L) so that the application bodies (9) inside the overlap zone (U) surround a reservoir volume (R) which is limited by the application bodies (9) and part of the core parts (14a, 14b, 14c) of the applicator elements (6a, 6b, 6c).

2. Cosmetic applicator (22), according to claim 1, **characterized by** the fact that the overlap zone (U) is made up of enveloping volumes (U) of two adjacent applicator elements (6a, 6b, 6c) and represents an intersection of these enveloping volumes.

3. Cosmetic applicator (22), according to one of the previous claims, **characterized by** the fact that the overlap zone (U), as an intersection of the enveloping volumes (U) of adjacent applicator elements (6a, 6b, 6c), is disk-shaped and has a consistent and/or even thickness which corresponds to the length of one overlap (X).

4. Cosmetic applicator (22), according to one of the previous claims, **characterized by** the fact that the overlap zone (U), as an intersection of the enveloping volumes (U) of adjacent applicator elements (6a, 6b, 6c), is wedge-shaped.

5. Cosmetic applicator (22), according to one of the previous claims, **characterized by** the fact that the overlap zone (U) is designed with an eccentric offset in relation to the longitudinal axis (L).

6. Cosmetic applicator (22), according to one of the previous claims, **characterized by** the fact the overlap zone (U) only stretches over a part of the circumferential direction of the applicator arrangement (4) and that there is no contact with/overlap of the enveloping volumes (U) in at least one other, e.g. opposite, area.

7. Cosmetic applicator (22), according to one of the previous claims, **characterized by** the fact that, with regard to the percentage of the total enveloping volume (U), two adjacent enveloping volumes (U) contribute to different degrees to the creation of the overlap zone (U).

8. Cosmetic applicator (22), according to one of the previous claims, **characterized by** the fact that at least one applicator element (6a, 6b, 6c) can be rotated around the longitudinal axis (L) in relation to an other applicator element (6a, 6b, 6c) and, in particular, that the applicator element is rotatably held by the holding part (5).

9. Cosmetic applicator (22), according to one of the previous claims, **characterized by** the fact that the application bodies (9) which rotate around a core part (14a, 14b, 14c) of the applicator element (6a, 6b, 6c) are arranged in rows (R1; R2; R3; R4; R5), whereupon it is preferred that the application bodies (9) are positioned in at least one row (R3) vertically along the longitudinal axis (L).

10. Cosmetic applicator (22), according to one of the previous claims, **characterized by** the fact that the rows (R1; R2; R3; R4; R5) of application bodies (9) are arranged at an acute angle (α) to the longitudinal axis (L), in particular an angle (α) of between 30° and 90°, most preferably an angle between 40° and 80°.

11. Cosmetic applicator (22), according to one of the previous claims, **characterized by** the fact that the holding part (5) has a mounting area (18) to incorporate the applicator elements (6a, 6b, 6c) and means (20) to at least axially immobilize the applicator elements (6a, 6b, 6c) in relation to the holding part (5), whereupon the means (20) have preferably at least a toroidal or lug-shaped protrusion (20) which, during mounting, fits into grooves (15), or is at least a press fit with which at least the one applicator element (6a, 6b, 6c) can be immobilized when mounted.

12. Cosmetic applicator (22), according to one of the previous claims, **characterized by** the fact that means (20) are provided for the anti-rotational locking of the applicator elements (6a, 6b, 6c), whereupon the means (20) for anti-rotational locking is preferably as cross-section of the mounting area (18) that is different from a cylindrical cross-section or a clamping engagement of the applicator elements (6a, 6b, 6c) with the holding part (5), whereas the profile is ideally polygon or oval.

13. Cosmetic applicator, (22) according to one of the previous claims, **characterized by** the fact that central axes (9') of the application bodies (9) of two applicator elements (6a, 6b, 6c) which form the overlap zone (U), are arranged at an angle (ß), whereupon the angle (β) is between 20° and 130°, in particular between 40° and 110°.

14. Cosmetic applicator (22), according to one of the previous claims, **characterized by** the fact that the core part (14a, 14b, 14c) has at least one thickened area (16), whereupon the bristles (9) emerge from the thickened area (16) and preferably emerge from an exterior surface (17) on the applicator element (6a, 6b, 6c) in a vertical direction.

15. Cosmetic applicator (22), according to one of the previous claims, **characterized by** the fact that the applicator arrangement (4) is built up of two different applicator elements (6a, 6b, 6c), whereupon the applicator elements (6a, 6b, 6c) are ideally different as regards their length (h), hardness, the geometry of the application bodies (9) or the facing with application bodies (9).

## Revendications

1. Applicateur de cosmétique (22), en particulier applicateur de mascara, comprenant un dispositif applicateur avec au moins deux éléments applicateurs (6a, 6b, 6c), lesquels comprennent des organes distributeurs (9), dans lequel les éléments applicateurs (6a, 6b, 6c) sont réalisés sous forme de pièces en matière plastique d'un seul tenant et possèdent une partie de base (14a, 14b, 14c) depuis laquelle partent les organes distributeurs (9) et la partie de base (14a, 14b, 14c) possède une ouverture traversante (15) pour l'enfiler sur une partie portante (5), dans lequel au moins deux éléments applicateurs (6a, 6b, 6c) sont agencés axialement en succession le long d'un axe longitudinal (L) du dispositif applicateur (4), dans lequel les organes distributeurs (9) des éléments applicateurs (6a, 6b, 6c) forment des champs d'organes applicateurs (BF) qui couvrent respectivement un volume enveloppe (E),
**caractérisé en ce qu'**au moins de volume enveloppe (E) d'éléments applicateurs (6a, 6b, 6c) agencés au voisinage se chevauchent et forment une zone de chevauchement, qui est réalisée à symétrie de révolution par rapport à l'axe longitudinal (L), de telle façon que les organes distributeurs (9) définissent à l'intérieur de la zone de chevauchement (Ü) les limites extérieures d'un volume réservoir (R), lequel est délimité par les organes distributeurs (9) et par une zone partielle des parties de base (14a, 14b, 14c) des éléments applicateurs (6a, 6b, 6c).

2. Applicateur de cosmétique (2) selon la revendication 1, **caractérisé en ce que** la zone de chevauchement (Ü) est formée par des volumes enveloppe (U) de deux éléments applicateurs voisins (6a, 6b, 6c) et représente une intersection de ces volumes enveloppe (U).

3. Applicateur de cosmétique (22) selon l'une des revendications précédentes, **caractérisé en ce que** la zone de chevauchement (Ü), en tant qu'intersection des volumes enveloppe (E) d'éléments applicateurs voisins (6a, 6b, 6c), possède une forme tridimensionnelle en forme de disque d'épaisseur constante et/ou régulière, qui correspond à une longueur de chevauchement (X).

4. Applicateur de cosmétique (22) selon l'une des revendications précédentes, **caractérisé en ce que** la zone de chevauchement (Ü), en tant qu'intersection des volumes enveloppe (U) éléments applicateurs voisins (6a, 6b, 6c), possède une forme tridimensionnelle en forme de coin.

5. Applicateur de cosmétique (22) selon l'une des revendications précédentes, **caractérisé en ce que** la zone de chevauchement (Ü) est agencée avec un décalage excentrique par rapport à l'axe longitudinal (L).

6. Applicateur de cosmétique (22) selon l'une des revendications précédentes, **caractérisé en ce que** la zone de chevauchement (Ü) s'étend uniquement sur une partie de la direction périphérique du dispositif applicateur (4) et dans au moins une autre zone, par exemple une zone opposée, il ne se produit aucun contact/chevauchement des volumes enveloppe (U).

7. Applicateur de cosmétique (22) selon l'une des revendications précédentes, **caractérisé en ce que**, par référence à la part, exprimée en pourcentage, du volume total d'un volume enveloppe (U), deux volumes enveloppe voisins (U) contribuent de façon différente à la formation de la zone de chevauchement (Ü).

8. Applicateur de cosmétique (22) selon l'une des revendications précédentes, **caractérisé en ce qu'**au moins un élément applicateur (6a, 6b, 6c) est capable de rotation autour de l'axe longitudinal (L) par rapport à un autre élément applicateur (6a, 6b, 6c), et est en particulier monté avec possibilité de rotation sur la partie portante (5).

9. Applicateur de cosmétique (22) selon l'une des revendications précédentes, **caractérisé en ce que** les organes distributeurs (9) sont agencés radialement en périphérie autour d'une partie de base (14a, 14b, 14c) de l'élément applicateur (6a, 6b, 6c) en rangées (R1 ; R2 ; R3 ; R4 ; R5) et les organes distributeurs (9) d'au moins une rangée (R3) sont de préférence dressés perpendiculairement sur l'axe longitudinal (L).

10. Applicateur de cosmétique (22) selon l'une des revendications précédentes, **caractérisé en ce que** les rangées (R1 ; R2 ; R3 ; R4 ; R5) d'organes distributeurs (9) définissent par rapport à l'axe longitudinal (L) un angle aigu (a), en particulier un angle (α) entre 30° et 90°, de façon particulièrement préférée un angle entre 40° et 80°.

11. Applicateur de cosmétique (22) selon l'une des revendications précédentes, **caractérisé en ce que** la partie portante (5) possède une zone de réception (18) pour la réception d'éléments applicateurs (6a, 6b, 6c) et des moyens (20) pour immobiliser au moins axialement les éléments applicateurs (6a, 6b, 6c) par rapport à la partie portante (5), lesdits moyens (20) comportant de préférence au moins une saillie (20) en forme de bourrelet annulaire ou en forme d'ergot qui, lors du montage, s'engagent dans des gorges (15) ou établissent au moins un montage serré avec lequel ledit au moins un élément applicateur (6a, 6b, 6c) est immobilisable dans l'état monté.

12. Applicateur de cosmétique (22) selon l'une des revendications précédentes, **caractérisé en ce qu'**il est prévu des moyens (20) pour immobiliser les éléments applicateurs (6a, 6b, 6c) sans possibilité de rotation, lesdits moyens (20) pour l'immobilisation sans possibilité de rotation étant de préférence une section, différente d'une section cylindrique, de la zone de réception (18) ou bien un montage serré des éléments applicateurs (6a, 6b, 6c) sur la partie portante (5), dans lequel la section est de manière idéale un polygone ou un ovale.

13. Applicateur de cosmétique (22) selon l'une des revendications précédentes, **caractérisé en ce que** les axes médians (9') des organes distributeurs (9), formant la zone de chevauchement (Ü), de deux éléments applicateurs (6a, 6b, 6c), définissent un angle (β), ledit angle (β) étant entre 20° et 130°, en particulier entre 40° et 110°.

14. Applicateur de cosmétique (22) selon l'une des revendications précédentes, **caractérisé en ce que** la partie de base (14a, 14b, 14c) possède au moins une zone épaissie (16), de sorte que les poils (9) partent de la zone épaissie (16), et partent de préférence perpendiculairement depuis une surface extérieure (17) de l'élément applicateur (6a, 6b, 6c).

15. Applicateur de cosmétique (22) selon l'une des revendications précédentes, **caractérisé en ce que** le dispositif applicateur (4) est constitué d'au moins deux éléments applicateurs différents (6a, 6b, 6c), et les éléments applicateurs (6a, 6b, 6c) diffèrent de manière idéale pour ce qui concerne la longueur (h), la dureté, la géométrie des organes distributeurs (9) ou la disposition des organes distributeurs (9).
